Europäisches Patentamt

European Patent Office

Office européen des brevets

(19)

(11) Veröffentlichungsnummer : **0 422 054 B1**

(12) # EUROPÄISCHE PATENTSCHRIFT

(45) Veröffentlichungstag der Patentschrift :
18.03.92 Patentblatt 92/12

(51) Int. Cl.$^5$ : **B01D 53/34,** B01D 53/14,
C10K 1/12

(21) Anmeldenummer : 89907144.3

(22) Anmeldetag : 21.06.89

(86) Internationale Anmeldenummer :
PCT/EP89/00697

(87) Internationale Veröffentlichungsnummer :
WO 89/12495 28.12.89 Gazette 89/30

(54) VERFAHREN ZUR ENTFERNUNG VON SCHWEFELWASSERSTOFF AUS KOKSOFENGAS.

(30) Priorität : 23.06.88 DE 3821117

(43) Veröffentlichungstag der Anmeldung :
17.04.91 Patentblatt 91/16

(45) Bekanntmachung des Hinweises auf die
Patenterteilung :
18.03.92 Patentblatt 92/12

(84) Benannte Vertragsstaaten :
AT BE FR GB IT

(56) Entgegenhaltungen :
EP-A- 0 042 041
DE-A- 2 558 754
FR-A- 2 116 099
FR-A- 2 353 329
GB-A- 2 082 199
GB-A- 2 087 422

(73) Patentinhaber : STILL OTTO GMBH
Christstrasse 9
W-4630 Bochum 1 (DE)

(72) Erfinder : STEWEN, Wilhelm
Hühnerstrasse 75
W-4200 Oberhausen 11 (DE)
Erfinder : HASSE, Hans-Jürgen
Hundsnockenstrasse 7
W-4300 Essen 1 (DE)

(74) Vertreter : Dahlkamp, Heinrich-Leo, Dipl.-Ing.
c/o Still Otto GmbH Patentabteilung
Christstrasse 9 Postfach 10 18 50
W-4630 Bochum 1 (DE)

EP 0 422 054 B1

## Beschreibung

Die Erfindung betrifft ein Verfahren zur Entfernung von Schwefelwasserstoff aus Kokereigas nach dem Verfahren der Ammoniak/Schwefelwasserstoff-Kreislaufwäsche mit einer aus Entsäurer und Abtreiber bestehenden Waschwasseraufbereitungsanlage, wobei aus der Waschwasseraufbereitungsanlage abgezogene $NH_3$-Dämpfe nach einer Kühlung und Nachwäsche zum zu reinigenden Koksofengas zurückgeführt werden.

Bei den bekannten Verfahren zur Gasentschwefelung wird zur absorptiven Entfernung des Schwefelwasserstoffes das im Koksofengas vorhandene Ammoniak genutzt.

Entsprechend der Gleichung

$$H_2O \ + \ NH_3 \ = \ NH_4OH$$

wird im $NH_3$-Wascher das Ammoniak in der wäßrigen Phase gelöst. Mittels $NH_4OH$ wird dann im vorgeschalteten $H_2S$-Wascher entsprechend den Gleichungen

$$NH_4OH \ + \ H_2S \ = \ NH_4SH \ + \ H_2O$$
$$2\,NH_4OH \ + \ H2S \ = \ (NH_4)_2S \ + \ 2\,H_2O$$

der Schwefelwasserstoff aus dem Gas entfernt.

Da parallel zur $H_2S$-Absorption auch andere saure Gasinhaltsstoffe wie $CO_2$ und HCN an $NH_4OH$ gebunden werden, reicht das $NH_3$-Angebot des Rohgases für eine $H_2S$-Entfernung auf z. B. 0,5 g/Nm$^3$ nicht aus.

Daher wird durch entsäuertes Wasser, das bei der Waschwasserregeneration durch Destillation gewonnen wird, eine $NH_3$-Kreislaufmenge zur $H_2S$-Wäsche zurückgeführt.

Bei dieser Fahrweise wird etwa 50 % des im entsäuerten Wasser vorhandenen $NH_3$ bereits an $H_2S$, $CO_2$ und HCN gebunden und kann für die $H_2S$-Absorption nicht mehr genutzt werden.

In der EP-A-0 042 041 ist ein Verfahren zum Auswaschen von $H_2S$ aus Kokereigas beschrieben, bei dem in einer Ammoniak/Schwefelwasserstoff-Kreislaufwäsche zunächst in einem $H_2S$-Wascher mit Ammoniakwasser und anschließend das im Koksofengas enthaltene Ammoniak durch Auswaschen mit Wasser entfernt wird und die aus dem $H_2S$-Wascher ablaufende Waschflüssigkeit auf den Kopf eines Entsäurers gegeben wird, in dem durch Wasserdampf und gegebenenfalls $NH_3$-Dämpfe aus einem $NH_3$-Abtreiber Schwefelwasserstoff ausgetrieben und einer weiteren Verwertungsanlage, z. B. einer Aufarbeitung zu Schwefelsäure, zugeführt wird, während der Ablauf des Entsäurers als Kreislaufwasser auf den Kopf des $H_2S$-Waschers zurückgeleitet wird. Die Anlage enthält einen Waschturm, in dessen unteren Teil beim Ausfall der Anlage zur Weiterverarbeitung der aus dem Entsäurer abgetriebenen $H_2S$-haltigen Schwaden diese Schwaden eingeleitet werden, und in dem sie mit Kohlewasser zur Erzeugung von sogenanntem Starkwasser gewaschen werden, während das den Wascher über Kopf verlassende Gas dem zu reinigen Koksofengas beigegeben wird. Kohlewasser ist dabei das aus der Kohlenfeuchte und dem Bildungswasser in der Vorlage bei der Rohgasberieselung anfallende Überschußwasser.

Bei dieser Schrift ist die Installation eines zusätzlichen Waschturmes vorgesehen worden, um bei Ausfall von Weiterverarbeitungsanlagen für $H_2S/NH_3$ diese Inhaltsstoffe durch Starkwassererzeugung binden und speichern zu können. Während des Normalbetriebes soll dieser Waschturm dazu dienen, aus dem entsäuerten Wasser mittels gereinigtem Koksofengas $NH_3$ abzustrippen und dieses $NH_3$ durch Rückführung des Gases in den $H_2S$-Wascher zur Verbesserung der $H_2S$-Wasche zu nutzen.

Der Erfindung liegt die Aufgabe zugrunde, bessere Entschwefelungsgrade zu erzielen. Dabei bietet es sich an, größere Mengen an entsäuertem Wasser auf die $H_2S$-Wascher zu geben, was für die destillative Waschwasseraufbereitung eine äquivalente Kapazität an Destillationseinrichtungen erfordert. Die Erfindung erreicht bessere Entschwefelungsgrade auf deutlich vorteilhafterem Weg mit den kennzeichnenden Merkmalen des Anspruches 1. Die Ansprüche 2 bis 3 enthalten zusätzliche erfinderische Verfahrensvorschläge.

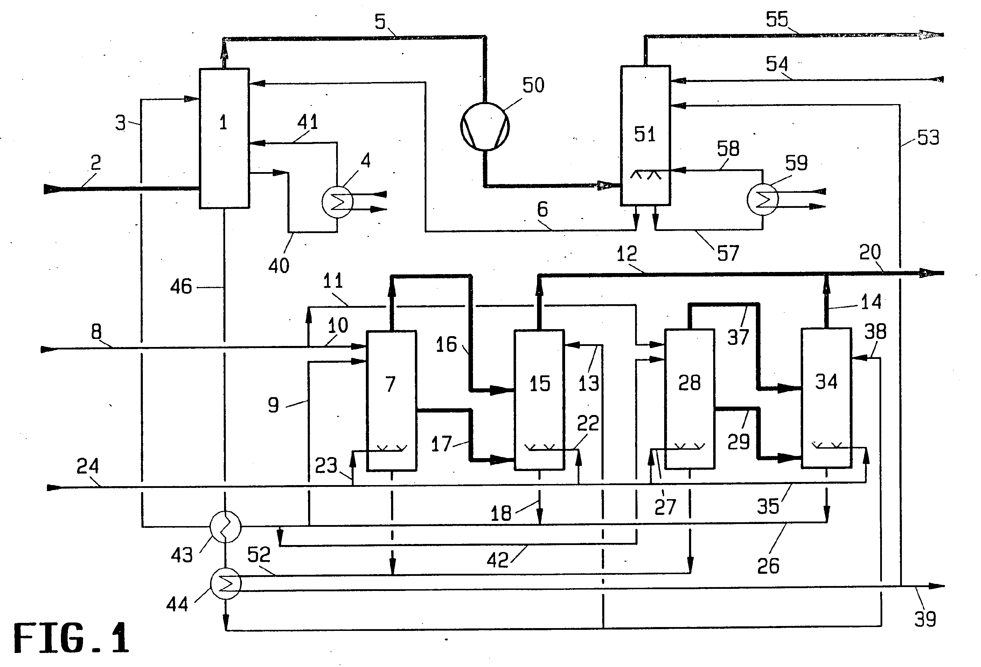

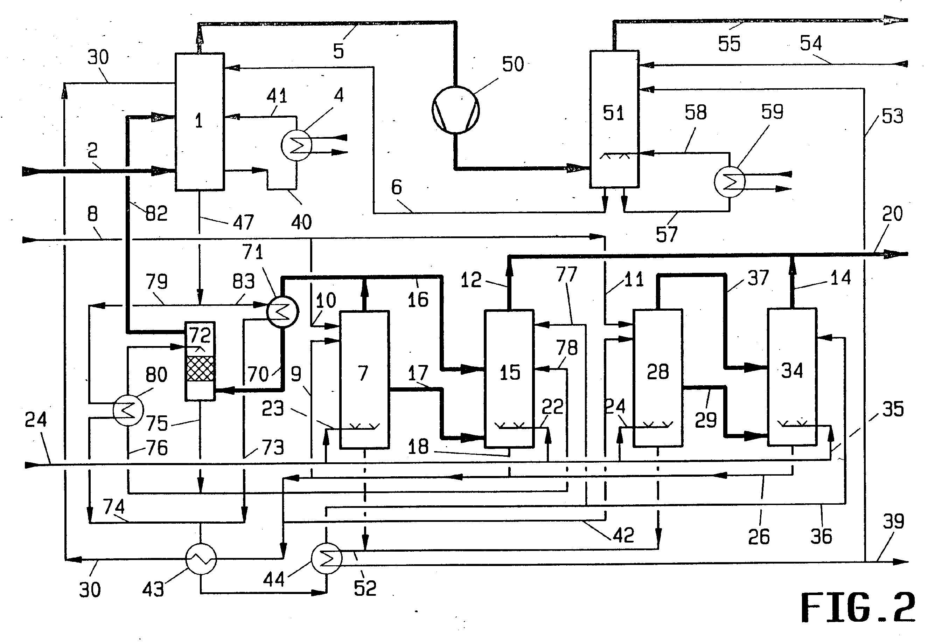

In den Figuren 1 und 2 sind Ausführungsbeispiele der bisherigen Ausführung einer Entschwefelungsanlage ohne Dämpferückführung (Figur 1) bzw. des erfindungsgemäßen Verfahrens (Figur 2) gegenübergestellt. Die in den Ausführungsbeispielen angegebenen Mengen beziehen sich jeweils auf einen stündlichen Durchsatz.

Das von der Koksofenanlage abgezogene Rohgas mit einer Menge von 64.000 Nm$^3$, einer Temperatur t von 25 °C, einem $NH_3$-Gehalt von etwa 5 g/Nm$^3$ und einem $H_2S$-Gehalt von etwa 6 g/Nm$^3$ wird bei (2) in einen $H_2S$-Wascher (1) eingeführt. Der $H_2S$-Wascher besitzt einen Kühlkreislauf mit den Leitungen (40), (41) und dem Kühler (4). Am Boden des $H_2S$-Wäschers (1) entweichen unten in die Leitung (46) im Ausführungsbeispiel nach Figur 1 105 m$^3$ angereichertes Waschwasser. Das von $H_2S$ gereinigte Rohgas wird am Kopfaustrag über Leitung (5) und einen Gassauger (50) abgezogen und einem $NH_3$-Wascher (51) zugeführt. Am Kopf des $NH_3$-Waschers (51) entweicht über Leitung (55) gereinigtes Gas. Der $NH_3$-Anteil des gereinigten Gases liegt bei < 0,02 g/Nm$^3$; der $H_2S$-Gehalt bei $\leqq$ 0,5 g/Nm$^3$. Der $NH_3$-Wascher (51) besitzt eine Gasschlußkühlung (59) mit den Kreislaufleitungen (57), (58). Die Temperatur im $NH_3$-Wascher beträgt 25 °C.

Der $NH_3$-Wascher wird mit Frischwasser aus einer Leitung (54) und abgetriebenem Wasser aus einer Leitung (53) gespeist. Das Wasser tritt am Kopf des $NH_3$-Waschers ein. Das Frischwasser hat im Ausführungs-

EP 0 422 054 B1

beispiel eine Menge von 13 m$^3$; das abgetriebene Wasser 40 m$^3$.

Das Ablaufwasser vom NH$_3$-Wascher (51) wird vom Boden des NH$_3$-Waschers (51) abgezogen und über Leitung (6) am Kopf des H$_2$S-Waschers (1) zugeführt. Die Ablaufwassermenge beträgt 53 m$^3$.

Dem H$_2$S-Wascher (1) wird bei (3) unterhalb der Ablaufwasserzuführung (6) darüber hinaus entsäuertes Wasser zugeführt. Die Menge beträgt 52 m$^3$.

Das am Boden des H$_2$S-Waschers (1) in die Leitung (46) austretende angereicherte Waschwasser hat eine Menge von 105 m$^3$ und gelangt in einen Wärmetauscher (43). Im Wärmetauscher wird die Abwärme des angereicherten Waschwassers teilweise abgezogen und zur Aufheizung des entsäuerten Wassers verwendet, das bei (3) in den H$_2$S-Wascher (1) geführt wird.

Nach Austritt aus dem Wärmetauscher (43) gelangt das angereicherte Waschwasser in einen weiteren Wärmetauscher (44). Hier findet eine Aufheizung statt. Die Aufheizung erfolgt mittels Abwasser, das aus Abtreibern (7) und (28) anfällt und über eine Abwasserleitung (52) zugeführt wird. Das aus dem Wärmetauscher (44) austretende angereicherte Waschwasser hat eine Temperatur von etwa 54 °C und wird über Leitung (13) einem Entsäurer (15) am Kopf sowie über Leitung (38) einem Entsäurer (34) am Kopf zugeführt. Dabei teilt sich die Waschwassermenge hälftig, d. h. jedem Entsäurer werden jeweils 52,5 m$^3$ Waschwasser zugeführt.

Aus den Entsäurern (15) und (34) wird das entsäuerte Wasser jeweils am Boden über Leitungen (18) bzw. (26) ausgetragen. Die dabei anfallende Wassermenge wird auf den H$_2$S-Wascher (1) und die Abtreiber (7) und (28) aufgeteilt. Das für den Abtreiber (7) bestimmte entsäuerte Wasser wird über (9) in diesen am Kopf eingetragen. Der Eintrag befindet sich unterhalb eines Kohlewassereintrages (10). Die für die Abtreiber (7) und (28) bestimmte Kohlewassermenge beträgt je 16 m$^3$ und wird über die Leitungen (8) und (11) am Kopf der Abtreiber (7) und (28) zugeführt. Darüber hinaus wird auch der Abtreiber (28) über Leitung (42) mit entsäuertem Wasser gespeist. Der Eintrag erfolgt in gleicher Weise am Kopf wie bei dem Abtreiber (7).

Aus den Abtreibern (7) und (28) wird das Kopfprodukt abgezogen und über die Leitungen (16) bzw. (37) mittig in die Entsäurer (15) und (34) eingetragen. Darüber hinaus wird noch ein Zwischenprodukt aus den Abtreibern (7) und (28) abgezogen und über die Leitungen (17) und (29) den Entsäurern (15) und (34) am Fuß zugeführt. Die Abtreiber (7) und (28) sowie die Entsäurer (15) und (34) werden mit Dampf betrieben. Der für die Destillationskolonnen bestimmte Dampf wird über eine Leitung (24) zugeführt. Der Gesamtdampfbedarf beträgt 15 t. Die für den Abtreiber (7) bestimmte Menge wird über Leitung (23), die für den Entsäurer (15) über Leitung (22), die für den Abtreiber (28) über Leitung (27) und die für den Entsäurer (34) über die Leitung (35) zugeführt. Das aus den Abtreibern (7) und (28) anfallende Abwasser wird nur teilweise entsorgt. Ein Teil des Abwassers, 40 m$^3$, wird über Leitung (53) in den NH$_3$-Wascher (51) eingeleitet, der andere Teil gelangt über (39) aus dem System. Am Kopf der Entsäurer (15) und (34) werden über die Leitungen (12) und (14) NH$_3$, H$_2$S, CO$_2$ und HCN enthaltende Dämpfe abgezogen, die über Leitung (20) z. B. zu einem Sulfatsättiger geleitet werden.

Die erfindungsgemäße Entschwefelungsanlage nach Figur 2 besitzt im Unterschied zu der Anlage nach Figur 1 u. a. eine NH$_3$-Rückführung (82). Die Verstärkerkolonne (72) wird mit einem Teil des Dämpfe-Kopfproduktes des Abtreibers (7) gespeist. Die zur Verstärkerkolonne führende Leitung ist mit (70) bezeichnet. In der Leitung (70) ist ein Wärmetauscher (71) vorgesehen.

Die Leitung (70) mündet am Fuß der Verstärkerkolonne (72). Die am Kopf der Verstärkerkolonne (72) ausgetragenen NH$_3$-Dämpfe werden über Leitung (82) mittig in den H$_2$S-Wascher (1) eingetragen. Die Dämpfemenge beträgt 500 m$^3$. Im Unterschied zu einem H$_2$S-Wascher nach Figur 1 wird nur eine Menge von 40 m$^3$ entsäuerten Wassers über Leitung (30) dem H$_2$S-Wascher (1) zugeführt. Aus dem H$_2$S-Wascher (1) fallen dann in Leitung (47) 93 m$^3$ angereicherten Waschwassers an. Das angereicherte Waschwasser verteilt sich auf Leitungen (83) und (79). Die Leitung (83) führt zum Wärmetauscher bzw. Dämpfekühler (71). Dort nimmt das Waschwasser unter Kühlung der Dämpfe Wärme auf und wird über Leitung (73) zum Wärmetauscher (43) geleitet. Das durch die Leitung (79) abströmende Waschwasser gelangt in einen Kühler (80). Dort wird im Kreis geführtes Starkwasser gekühlt. Das aus dem Kühler (80) austretende Waschwasser wird über Leitung (74) ebenfalls zum Wärmetauscher (43) geleitet und dann in gleicher Weise wie nach Figur 1 in den Wärmetauschern (43) und (44) behandelt. Dann gelangt Waschwasser in einer Menge von 46 m$^3$ über die Leitung (77) in den oberen Teil des Entsäurers (15) und in einer Menge von 47 m$^3$ über die Leitung (36) in den oberen Teil des Entsorgers (34).

Der Starkwasserkreis wird durch die Leitungen (75) und (76), den Wärmetauscher (80) und die Verstärkerkolonne (72) gebildet. Das aus der Verstärkerkolonne (72) anfallende Starkwasser wird teilweise, in einer Menge von 3 m$^3$, über Leitung (78) zum Mittelteil des Entsäurers geführt.

Die Zuführung der NH$_3$-Dämpfe über Leitung (82) direkt unterhalb der Aufgabe für entsäuertes Wasser (30) am H$_2$S-Wascher (1) ergibt folgende Vorteile:

Das entsäuerte Wasser steht bezüglich seines NH$_3$-Partialdrukkes mit einem Gas im Gleichgewicht, daß etwa 10 g NH$_3$/m$_N^3$ enthält. Da die NH$_3$-Gehalte im Gas niedriger sind, kommt es bei der Aufgabe des entsäuer-

3

ten Wassers zu einem Abstrippeffekt des $NH_3$ in das Gas, wobei das abgestrippte $NH_3$ in der oberen Waschzone des $H_2S$-Waschers (1) ausgewaschen wird und $H_2S$ bindet.

Die $NH_3$-Dampfezuführung (82) unterhalb des entsäuerten Wassers (30) bewirkt eine $NH_3$-Partialdruckerhöhung im Koksofengas, so daß aus dem entsäuerten Wasser kein $NH_3$ abgestrippt wird. Das $NH_3$ im entsäuerten Wasser steht also für die darunterliegende Waschzone zur Verfügung, während die $NH_3$-Dämpfe im oberen Teil die Entschwefelung verbessern, ohne den $NH_3$-Wascher (51) mit zusätzlichem Ammoniak zu belasten. Durch die $NH_3$-Dämpferückführung (82) sind größere Ammoniakanreicherungen im Waschwasser möglich.

Das anfallende Starkwasser enthält die bei der $NH_3$-Dämpfekühlung und -dämpfewäsche anfallenden sauren Komponenten.

Durch die Aufgabe von Starkwasser über Leitung (78) auf den Entsäurer (15) werden die ausgewaschenen Inhaltsstoffe über den Entsäurerkopf (12) ausgeschleust, die Qualität der gewonnenen $NH_3$-Dämpfe wird verbessert. Gleichzeitig führt diese Schaltung zu einem verbesserten Destillationsverhalten des Entsäurers, was bewirkt, daß die $NH_3$-Konzentrationen problemlos eingestellt werden können und außerdem die Entsäuerung noch geringfügig verbessert wird.

Zur Vorwärmung des angereicherten Waschwassers vor Aufgabe auf den Entsäurerkopf wird die bei der $NH_3$-Dämpfekühlung (71) und $NH_3$-Dämpfewäsche (72) frei werdende Wärme genutzt. Gegenüber bisherigen Verfahren der $NH_3$-Dämpferückführung können dadurch Dampfeinsparungen von 1 bis 5 t/h erzielt werden.

Gegenüber einer Basisfahrweise ohne Dämpferückführung sind somit neben der Reduzierung von Waschwassermengen auch Dampfeinsparungen erreichbar.

Der Bedarf an entsäuertem Wasser kann um über 20 %, der Bedarf an Gesamtwaschwasser um ca. 12 % gesenkt werden.

Hieraus ergeben sich folgende Verbesserungen:
– Verbesserung der Entschwefelung ohne zusätzlichen Wascherwasserbedarf, z. B. bei hohem Gas- und Wasseranfall (Sommerbetrieb) oder bei Überlastbetrieb, für den die vorhandene Kolonne nicht ausgelegt ist. Dieses gilt insbesondere für die Verbesserung bereits vorhandener Anlagen;
– Verkleinerung der Destillations- und Kühlerkapazität bei Neuplanungen mit den sich hieraus ergebenden wirtschaftlichen Vorteilen
– bzw. Verbesserung des Destillationsverhaltens des Entsäurers bei gleicher Kapazität mit der Absenkung der $NH_3$-Konzentration im entsäuerten Wasser und der Anreicherung.

Folgende weitere Zahlen des Ausführungsbeispieles kennzeichnen die Vorteile der Erfindung:
– 500 m³/h Dämpfe werden auf den $H_2S$-Wascher (1) zurückgeführt;
– das bei der Nachwäsche (72) der $NH_3$-Dämpfe erzeugte Starkwasser wird auf den Entsäurer zurückgeführt in einer Menge von 3 m³/h;
– die auf den $H_2S$-Wascher aufzugebende Menge des entwässerten Wassers kann von 52 m³/h auf 40 m³/h reduziert werden;
– im gleichen Umfang kann die Destillationskapazität in der Aufgabe des angereicherten, vom $H_2S$-Wascher ablaufenden Waschwassers von 105 m³/h auf 93 m³/h deutlich gesenkt werden;
– die Vorwärmung des angereicherten Waschwassers vor Aufgabe auf den Entsäurer wird von 54°C auf 75°C verbessert, wodurch eine Dampfeinsparung bei einem Dampfbedarf von 15 t/h von 1 - 5 t/h abhängig vom Durchsatz herbeigeführt werden kann;
– unabhängig von diesem Mengen- und Verbrauchsvergleich wird durch das erfindungsgemäße Verfahren die $NH_3$-Anreicherung im Waschwasser erhöht und die Qualität der gewonnenen $NH_3$-Dämpfe für die Weiterverarbeitung verbessert.

## Patentansprüche

1. Verfahren zur Entfernung von Schwefelwasserstoff aus Koksofengas nach dem Verfahren der Ammoniak/Schwefelwasserstoff-Kreislaufwäsche mit einer aus Entsäurer (15/34) und Abtreiber (7/28) bestehenden Waschwasseraufbereitungsanlage, wobei die aus einem Abtreifer der Waschwasseraufbereitungsanlage abgezogenen $NH_3$-Dämpfe nach einer Kühlung und Nachwäsche zum zu reinigenden Koksofengas zurückgeführt und unterhalb der Aufgabe des entsäuerten Waschwassers dem Schwefelwasserstoff-Wäscher zugeführt werden, **dadurch gekennzeichnet,** daß zur Verbesserung der Entschwefelung die in der Waschwasseraufbereitungsanlage erzeugten, aus einem Abtreiber (7) abgezogenen $NH_3$-Dämpfe nach einer Kühlung in einer Verstärkungskolonne (72) nur mit im Kreislauf geführten Starkwasser einer Nachwäsche unterzogen werden.

2. Verfahren nach Anspruch 1, **dadurch gekennzeichnet,** daß das bei der Nachwäsche der erzeugten $NH_3$-Dämpfe anfallende Starkwasser auf einen Mittleren Entsäurerboden aufgegeben wird, wodurch die erforderliche Reinheit der $NH_3$-Dämpfe und die benötigen Konzentrationsverhältnisse bei der Entsäuerung eingestellt werden können.

3. Verfahren nach Anspruch 1, **dadurch gekennzeichnet,** daß zur Vorwärmung des angereicherten Waschwassers die bei der NH$_3$-Dämpfewäsche anfallende Kondensationswärme und die Lösungswärme der ausgewaschenen Komponenten genutzt wird, wodurch die Dampfverbräuche für die Destillation gesenkt werden können.

## Claims

1. A process for the removal of hydrogen sulfide from coke oven gas according to the ammonia/hydrogen sulfide circulation scrubbing principle including a scrubbing liquor treatment installation consisting of dissociator (15/34) and still (7/28) with the NH$_3$ vapours withdrawn from a still of the scrubbing liquor treatment installation, after cooling and subsequent washing, being returned to the coke oven gas to be cleaned and fed to the hydrogen sulfide washer below the deacidified scrubbing liquor feed location **characterized in that** the NH$_3$ vapours produced in the scrubbing liquor treatment installation and withdrawn from a still (7) are subjected, after cooling, to subsequent scrubbing in a concentrating column (72) exclusively using circulated concentrated ammnia liquor to improve the sulfur removal efficiency.

2. A process according to claim 1 **characterized in that** the concentrated ammonia liquor produced in the subsequent scrubbing treatment of the NH$_3$ vapours is fed to one of the center trays of the dissociator which allows the required purity of the NH$_3$ vapours and the necessary concentration conditions during deacidification to be adjusted.

3. A process according to claim 1 **characterized in that** the heat of condensation generated during the NH$_3$ vapour scrubbing and the heat of solution of the washed-out components is utilized for preheating the enriched scrubbing liquor which will result in reducing the steam consumption during distillation.

## Revendications

1. Procédé pour extraire l'acide sulfurique du gaz de fours à coke selon le procédé de lavage circulaire ammoniaque/acide sulfurique avec une installation de traitement de l'eau de lavage constituée par un neutralisateur ( 15/34) et un stripper(7/28), les vapeurs NH$_3$ extraites d'un stripper de l'installation de traitement de l'eau de lavage étant redonnées après refroidissement et relavage au gaz de cokerie à nettoyer et conduites dans le laveur d'acide sulfurique sous l'admission de l'eau de lavage neutralisée, **caratérisé par le fait que** pour permettre une meilleure désulfuration les vapeurs NH$_3$ produites dans l'installation de traitement de l'eau de lavage et extraites d'un stripper (7) sont soumises après refroidissement dans une colonne de concentration (72) à un relavage avec seulement de l'eau forte menée dans le circuit.

2. Procédé selon la revendication 1 **caratérisé par le fait que** l'eau forte qui résulte du relavage des vapeurs NH$_3$ produites est envoyée sur un terrain de neutralisation moyen ce qui permet de normaliser la pureté des vapeurs NH$_3$ et les rapports de concentration nécessités lors de la neutralisation.

3. Procédé selon la revendication 1 **caratérisé par le fait que** pour le préchauffage de l'eau de lavage enrichie on utilise la chaleur de condensation résultant du lavage des vapeurs NH$_3$ et la chaleur de dissolution des composants.

FIG.1

EP 0 422 054 B1

FIG.2

EP 0 422 054 B1